# EUROPÄISCHE PATENTSCHRIFT

(11) **EP 3 587 659 B1**
(45) Veröffentlichungstag und Bekanntmachung des Hinweises auf die Patenterteilung: **16.12.2020**
(21) Anmeldenummer: 19180143.0
(22) Anmeldetag: 14.06.2019
(51) Int. Cl.: D06F 58/20, A47L 15/42, D06F 39/00, D06F 58/24

(54) **WASSERFÜHRENDES HAUSHALTSGERÄT**
WATER-TRANSPORTING HOUSEHOLD DEVICE
APPAREIL D'ACHEMINEMENT D'EAU ÉLECTROMÉNAGER

(30) Priorität: 27.06.2018 DE 102018115456
(43) Veröffentlichungstag der Anmeldung: 01.01.2020
(73) Patentinhaber: Miele & Cie. KG, 33332 Gütersloh (DE)
(72) Erfinder: Bertram, Andre, 33609 Bielefeld (DE); Dahms, Tobias, 30519 Hannover (DE); Grawe, Patrick, 32130 Enger (DE); Schimke, Patrick, 33330 Gütersloh (DE)

(56) Entgegenhaltungen:
- EP-A1- 2 682 039
- EP-A2- 0 895 036
- DE-A1- 2 457 182
- JP-A- S6 020 056

## Beschreibung

Die Erfindung betrifft ein wasserführendes Haushaltsgerät, insbesondere eine Geschirrspülmaschine, mit einem einen Reinigungsraum, insbesondere Spülraum, bereitstellenden Reinigungsbehälter, insbesondere Spülbehälter, zur Aufnahme von zu reinigendem Reinigungsgut, beispielsweise Spülgut, einer Beschickungseinrichtung, insbesondere Sprüheinrichtung, zur Beschickung von zu reinigendem Reinigungsgutmit Reinigungsflotte sowie mit einer Wärmepumpeneinrichtung zur Aufheizung von Reinigungsflotte, wobei die Wärmepumpeneinrichtung einen Verflüssiger und einen Sammler aufweist.

Wasserführende Haushaltsgeräte wie zum Beispiel Waschmaschinen, Haushaltsgeschirrspülmaschinen, Reinigung- und/oder Desinfektionsautomaten und/oder dergleichen sind aus dem Stand der Technik an sich gut bekannt, weshalb es eines gesonderten druckschriftlichen Nachweises an dieser Stelle grundsätzlich nicht bedarf. Es sei deshalb auch nur beispielhaft auf die EP 2 682 039 A1 verwiesen, die ein gattungsgemäßes Haushaltsgerät in Form einer Geschirrspülmaschine offenbart.

Die aus der EP 2 682 039 A1 vorbekannte Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die aus der EP 2 682 039 A1 vorbekannte Geschirrspülmaschine verfügt des Weiteren über eine Wärmepumpeneinrichtung zur Aufheizung von Spülflotte, und dies zu dem Zweck, den Energieverbrauch der Geschirrspülmaschine insbesondere beim Aufheizen der Spülflotte zu reduzieren, insbesondere deshalb, weil ein solches Aufheizen der Spülflotte den größten Teil am Energieverbrauch einer Geschirrspülmaschine ausmacht. Die Wärmepumpeneinrichtung verfügt in an sich bekannter Weise über einen Verdampfer, einen Verdichter, einen Verflüssiger, einen Sammler, ein Expansionsorgan in Form einer Drossel und einen diese Komponenten verbindenden Strömungskreislauf.

Die Wärmepumpeneinrichtung der Geschirrspülmaschine nach der EP 2 682 039 A1 ist eine Luft-Wasser-Wärmepumpeneinrichtung. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Dabei dient der Verflüssiger der Wärmepumpeneinrichtung als Wärmetauscher, mittels dem Wärmeenergie von einem im Strömungskreislauf der Wärmepumpeneinrichtung umgewälzten Arbeitsmedium auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Arbeitsmedium übertragen wird, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energieabgabe eine Verflüssigung des Arbeitsmittels stattfindet. Die dabei freiwerdende Wärmeenergie dient der Spülflottenaufheizung.

Die DE 24 57 182 A1 beschreibt eine Geschirrspülmaschine mit einer Wärmepumpe, mittels der Wärme der Umgebungsluft entzogen und auf zum Spülen vorgesehenes Wasser übertragen werden kann. Die Wärmepumpe weist dabei einen ersten Kondensator auf, mit dem Tankwasser erwärmt wird und einen nachgeschalteten zweiten Kondensator, der gleichzeitig Sammler und Unterkühler ist und mit dem Nachspülwasser vorgewärmt wird.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Als Flüssigkeitsreservoir kann beispielsweise ein mit Wasser befüllter Wassertank dienen, der den Verdampfer der Wärmepumpeneinrichtung beherbergt. Im Betriebsfall kommt es infolge eines Wärmeenergieentzugs zu einer Abkühlung des im Tank bevorrateten Wassers, wobei eine Abkühlung des Wassers bis zur Vereisung vorgenommen werden kann.

Den vorbekannten Konstruktionen ist gemein, dass zu Beginn eines bestimmungsgemäßen Betriebs der Wärmepumpeneinrichtung eine vergleichsweise große Menge an gasförmigem Arbeitsmedium im Verflüssiger zurückverflüssigt werden muss, zum Ende des Betriebs der Wärmepumpeneinrichtung hingegen weniger. Dies führt dazu, dass zum Ende des Betriebs der Wärmepumpeneinrichtung mehr verflüssigtes Arbeitsmittel anfällt, als im weiteren Prozessablauf im Verdampfer wieder verdampft wird. Es bedarf deshalb der Zwischenspeicherung von verflüssigtem Arbeitsmittel, weshalb aus dem Stand der Technik vorbekannte Wärmepumpeneinrichtungen über einen Sammler verfügen, der dem Verflüssiger strömungstechnisch nachgeschaltet bzw. dem Verdampfer strömungstechnisch vorgeschaltet ist. Dieser Sammler dient als Pufferspeicher, der im Bedarfsfall im Verflüssiger verflüssigtes Arbeitsmedium zwischenspeichert, bevor dieses in den Verdampfer gelangt.

Obgleich sich die vorbeschriebene Konstruktion im alltäglichen Praxiseinsatz bewährt hat, besteht Verbesserungsbedarf, insbesondere hinsichtlich einer vereinfachten und damit kostengünstigeren Herstellung. Es ist deshalb die **Aufgabe** der Erfindung, ein gattungsgemäßes Haushaltsgerät dahingehend weiterzuentwickeln, das konstruktiv eine vereinfachte Herstellung ermöglicht.

Zur **Lösung** dieser Aufgabe wird mit der Erfindung ein gattungsgemäßes Haushaltsgerät mit den Merkmalen von Anspruch 1 vorgeschlagen.

Nach dem Stand der Technik sind der Verflüssiger und der Sammler der Wärmepumpeneinrichtung als jeweils separate Bauteile ausgebildet, die im endmontierten Zustand über entsprechende Leitungswege strömungstechnisch miteinander verbunden sind. In Abkehr hierzu wird mit der erfindungsgemäßen Ausgestaltung vorgeschlagen, den Verflüssiger und den Sammler konstruktiv miteinander zu kombinieren und zu einem Bauteil auszubilden. Diese erfindungsgemäße Ausgestaltung erbringt den Vorteil einer vereinfachten Handhabung während der Herstellung, da nicht mehr zwei, sondern nur noch ein Bauteil vorgehalten und verbaut werden muss. Dabei entfällt insbesondere ein Lötvorgang zur strömungstechnischen Verbindung von Sammler und Verflüssiger mittels eines entsprechenden Leitungswegs. Die erfindungsgemäße Kombination von Verflüssiger und Sammler hat zudem den Vorteil, dass der für die Wärmepumpeneinrichtung vorzusehende Einbauraum verkleinert ist, was eine optimierte Nutzung des zur Verfügung stehenden Einbauraums ermöglicht. Aufgrund des Wegfalls von bislang vorzusehenden Lötstellen zur strömungstechnischen Verbindung von Verflüssiger und Sammler verringert sich die Anzahl potentieller Leckagestellen, was die Betriebssicherheit in vorteilhafter Weise erhöht.

Die einteilige Bauweise von Verflüssiger und Sammler wird gemäß einem weiteren Merkmal der Erfindung bevorzugter Weise dadurch erreicht, dass der Sammler als integraler Bestandteil des Verflüssigers ausgebildet ist. Demnach wird ein aus dem Stand der Technik an sich bekannter Verflüssiger erfindungsgemäß um die Funktion des Sammlers erweitert. Im Ergebnis dieser konstruktiven Ausgestaltung steht ein Verflüssiger, der für das Arbeitsmedium der Wärmepumpeneinrichtung ein Zusatzvolumen bereitstellt, das als Pufferspeicher dazu dient, verflüssigtes Arbeitsmittel zwischenspeichern zu können. Dieses Zusatzvolumen dient mithin als Sammlervolumen, womit der Sammler als integraler Bestandteil des Verflüssigers ausgebildet ist.

Der Verflüssiger ist als Wärmetauscher ausgebildet und verfügt gemäß einem weiteren Merkmal der Erfindung über zwei Rohre, die unter Belassung eines Ringspaltraums koaxial zueinander angeordnet sind, wobei das vom Ringspaltraum umgebene Innenrohr mit Reinigungsflotte, also etwa Spülflotte, und der vom Außenrohr bereitgestellte Ringspaltraum mit Kältemittel beaufschlagt sind.

Demgemäß ist der Verflüssiger der Wärmepumpeneinrichtung als Koaxialwärmetauscher ausgebildet. Er verfügt über ein erstes Rohr, das sog. Reinigungsflottenrohr bzw. Spülflottenrohr, durch das hindurch im bestimmungsgemäßen Verwendungsfall die aus dem Reinigungsraum bzw. Spülraum des Haushaltsgeräts bzw. der Geschirrspülmaschine stammende Reinigungsflotte bzw. Spülflotte geführt wird. Als zweites Rohr ist das sog. Kältemittelrohr vorgesehen, durch das das Arbeitsmedium der Wärmepumpeneinrichtung, auch Kältemittel genannt, im bestimmungsgemäßen Verwendungsfall geführt ist. Dabei ist das erste Rohr, also Spülflottenrohr innerhalb des Kältemittelrohrs angeordnet, womit das Spülflottenrohr das Innenrohr und das Kältemittelrohr das Außenrohr bilden.

Das Innenrohr weist einen Außendurchmesser auf, der den Innendurchmesser des Außenrohrs unterschreitet, so dass die beiden Rohre unter Belassung eines Ringspaltraums koaxial zueinander angeordnet sind.

Im bestimmungsgemäßen Verwendungsfall wird der Koaxialwärmetauscher, das heißt der Verflüssiger von Reiniungsflotte bzw. Spülflotte einerseits sowie vom Arbeitsmedium andererseits durchströmt, und zwar bevorzugter Weise im Gegenstrom. Dabei dient die Rohrwandung des Innenrohres, das heißt des Reinigungsflottenrohres bzw. Spülflottenrohres als Wechselwirkungsoberfläche, über die ein Wärmeaustausch zwischen Reinigungsflotte und Arbeitsmedium stattfindet.

Die Rohre des Koaxialwärmetauschers können geradlinig oder beispielsweise zu Schleifen gebogen ausgebildet sein. Je nach Ausführungsform beträgt die Wirklänge der Rohre zwischen 0,5 m und 3 m, beispielsweise 2,20 m, 2,40 m oder dergleichen. Hinsichtlich ihrer Außen- bzw. Innendurchmesser sind die beiden Rohre derart aufeinander abgestimmt, dass der Ringspaltraum ein Spaltmaß je nach Anwendungsfall zwischen 0,15 mm und 1 mm, vorzugsweise zwischen 0,3 mm und 0,8 mm, noch mehr bevorzugt von 0,5 mm aufweist.

Gemäß einem weiteren Merkmal der Erfindung ist vorgesehen, dass der Ringspaltraum in ein als Sammlervolumen dienendes Zusatzvolumen einmündet. Demgemäß ist also ein Zusatzvolumen vorgesehen, das in strömungstechnischer Verbindung mit dem Ringraumvolumen steht, indem dieses in das Zusatzvolumen einmündet. Das Arbeitsmedium der Wärmepumpeneinrichtung, das im bestimmungsgemäßen Prozesszyklus den Ringspaltraum des Verflüssigers passiert, gelangt mithin nach einem Durchströmen des Ringspaltraums in das Zusatzvolumen, in dem das Arbeitsmedium im Bedarfsfall vor einer Weiterleitung in den Verdampfer zwischengespeichert werden kann. Insofern dient das Zusatzvolumen als Sammlervolumen.

Das Zusatzvolumen wird gemäß einem weiteren Merkmal der Erfindung vom Außenrohr des Koaxialwärmetauschers, das heißt des Verflüssigers bereitgestellt. Diesbezüglich werden mit der Erfindung unterschiedliche Konstruktionsalternativen vorgeschlagen.

Gemäß einer ersten Erfindungsalternative ist vorgesehen, dass das Außenrohr einen in Rohrlängsrichtung verlaufenden Abschnitt mit einem im Vergleich zum übrigen Innendurchmesser vergrößerten Innendurchmesser aufweist. Demnach ist ein Außenrohr vorgesehen, das über eine radiale Ausbuchtung verfügt. Im Bereich dieser radialen Ausbuchtung entsteht aufgrund der Ausbuchtung ein vergrößerter Ringspaltraum, wodurch das Zusatzvolumen geschaffen ist. Das Zusatz- bzw. Sammlervolumen ist je nach Anwendungsfall zwischen 15 cm³ und 55 cm³, vorzugsweise zwischen 25 cm3 und 45 cm³, noch mehr bevorzugt 35 cm³ groß. Dementsprechend sind der Innendurchmesser des Außenrohrs im Bereich der radialen Erweiterung und/oder die Länge der radialen Erweiterung in Rohrlängsrichtung auszulegen.

Gemäß einer zweiten Alternative ist vorgesehen, dass das Außenrohr mit einer in Rohrlängsrichtung verlaufenden Radialausbuchtung versehen ist. Dabei sind bevorzugter Weise eine Mehrzahl derartiger Radialausbuchtungen vorgesehen, die bevorzugter Weise in Umfangsrichtung des Rohres gleich verteilt angeordnet sind. Gemäß dieser Ausführungsform wird ein Außenrohr vorgeschlagen, das eine von der Kreisform abweichende Außenkontur bereitstellt. Dabei ist im Bereich der Radialausbuchtungen der Abstand zu dem vom Außenrohr aufgenommenen Innenrohr vergrößert, womit in Summe das als Sammlervolumen dienende Zusatzvolumen geschaffen ist.

Es ist auch möglich, dass das Außenrohr einen das Zusatzvolumen bereitstellenden Rohrstutzen trägt. Dieser Rohrstutzen wirkt mit einer vom Außenrohr bereitgestellten Strömungsöffnung zusammen, womit der strömungstechnische Anschluss des vom Rohrstutzen bereitgestellten Zusatzvolumens zum Ringspaltraum gegeben ist.

Es können eine Mehrzahl von Rohrstutzen der vorstehenden Art vorgesehen sein, die bevorzugter Weise in Rohrlängsrichtung hintereinander am Außenrohr angeordnet sind. Dabei stellt ein jeder Rohrstutzen einen Teil des Zusatzvolumens bereit, so dass in Summe aller Teilvolumina das als Sammlervolumen dienende Zusatzvolumen geschaffen ist.

Der Rohrstutzen kann zum Außenrohr radial ausgerichtet sein. Diese Ausrichtung ist insbesondere aus Gründen der vereinfachten Herstellung bevorzugt.

Mit der erfindungsgemäßen Ausgestaltung wird insgesamt eine Konstruktion vorgeschlagen, der gemäß im Unterschied zum Stand der Technik der Sammler als zusätzliches Bauteil entfällt, was die Lagerhaltung, die Herstellung sowie die Betriebssicherheit verbessert. Insbesondere entfällt der Herstellungsschritt der Verlötung, was den Fertigungsaufwand minimiert und die Anzahl möglicher Leckagestellen verringert.

Es wird zudem eine verbesserte Effizienz der Wärmetauschereinrichtung erreicht, da das Arbeitsmedium bzw. Kältemittel im bestimmungsgemäßen Betriebsfall etwas unterkühlt werden kann. Diese Unterkühlung erhöht die Wärmemenge, die an die Reinigungsflotte bzw. Spülflotte abgegeben werden kann. Außerdem wird durch die Unterkühlung der Dampfgehalt im Eintrittsbereich des Verdampfers verringert. Dies erbringt in vorteilhafter Weise, dass hier ebenfalls mehr Wärme aufgenommen werden kann.

Über die Länge des als Koaxialwärmetauscher ausgebildeten Verflüssigers in Längsrichtung können unterschiedlich ausgebildete Ringspaltraummaße vorgesehen sein, womit abschnittsweise der kältemittelseitige Wärmeübergang erhöht bzw. der kältemittelseitige Druckverlust reduziert werden kann. Dies führt zu einer höheren Effizienz der Wärmepumpeneinrichtung bzw. zu einer Reduzierung der Baugröße.

Darüber hinaus ist es durch eine Verkleinerung der Ringspaltraummaße für Bereiche mit hoher Dichte des Kältemittels auf der Hochdruckseite möglich, die insgesamt benötigte Kältemittelfüllmenge zu reduzieren. Als derartige Bereiche bieten sich insbesondere der Bereich mit verflüssigtem Kältemittel direkt hinter dem Sammler und der Bereich mit Kältemittel mit geringem Dampfanteil direkt vor dem Sammler an.

Gemäß einem Ausführungsbeispiel weist der Verflüssiger in einem in Strömungsrichtung des Arbeitsmittels vor dem Sammler bzw. dem Zusatzvolumen gelegenen Abschnitt einen Ringspaltraum mit einem ersten Maß und in einem in Strömungsrichtung des Arbeitsmittels hinter dem Sammler bzw. dem Zusatzvolumen gelegenen Abschnitt einen Ringspaltraum mit zweiten Maß auf. Das erste Maß und das zweite Maß liegen zwischen 0,15mm und 1mm. Das erste Maß und das zweite Maß können gleich groß sein. Vorzugsweise ist das zweite Maß jedoch vom ersten Maß verschieden, vorzugsweise kleiner. Das erste Maß kann dabei beispielsweise zwischen 0,4mm und 1mm liegen und das zweite Maß zwischen 0,15mm und 0,4mm, insbsondere etwa 0,2mm.

Gemäß einem weiteren Ausführungsbeispiel weist der Verflüssiger in Strömungsrichtung des Arbeitsmittels vor dem Sammler bzw. dem Zusatzvolumen einen ersten Abschnitt mit einem ersten Ringspaltraummaß und einen zwischen dem ersten Abschnitt und dem Sammler bzw. dem Zusatzvolumen angeordneten zweiten Abschnitt mit einem vom ersten verschiedenen zweiten Ringspaltraummaß auf. Das zweite Ringspaltraummaß ist vorzugsweise kleiner als das erste Ringspaltraummaß. Das erste Ringspaltraummaß kann beispielsweise zwischen 0,6mm und 0,8mm betragen, während das zweite Ringspaltraummaß beispielsweise zwischen 0,3mm und 0,5mm betragen kann. Darüber hinaus kann der Verflüssiger dabei einen weiteren, in Strömungsrichtung des Arbeitsmittels hinter dem Sammler bzw. dem Zusatzvolumen gelegenen Abschnitt aufweisen mit einem gegenüber dem zweiten Ringspaltraummaß nochmals geringeren Ringspaltraummaß, welches vorzugsweise zwischen 0,15mm und 0,4mm, beispielsweise bei etwa 0,2mm liegt.

Als wasserführende Haushaltsgeräte, für die die erfindungsgemäße Ausgestaltung zur Anwendung kommen kann, kommen insbesondere Geschirrspülmaschinen, Waschmaschinen, Waschtrockner und/oder dergleichen Geräte in Frage.

Weitere Merkmale und Vorteile der Erfindung ergeben sich aus der nachfolgenden Beschreibung anhand der Figuren. Dabei zeigen
- Fig. 1: in lediglich schematischer Darstellung eine erfindungsgemäß ausgebildete Geschirrspülmaschine;
- Fig. 2: in schematisch perspektivischer Darstellung einen erfindungsgemäß ausgebildeten Verflüssiger gemäß einer ersten Ausführungsform;
- Fig. 3: in schematischer Seitenansicht einen erfindungsgemäß ausgebildeten Verflüssiger gemäß einer zweiten Ausführungsform;
- Fig. 4: in schematischer Seitenansicht einen erfindungsgemäß ausgebildeten Verflüssiger gemäß einer dritten Ausführungsform;
- Fig. 5: in einer schematischen Stirnansicht den Verflüssiger nach Fig. 4;
- Fig. 6: in schematischer Perspektivdarstellung einen erfindungsgemäßen Verflüssiger gemäß einer vierten Ausführungsform;
- Fig. 7: in schematischer Stirnansicht den Verflüssiger nach Fig. 6;
- Fig. 8: in schematischer Seitenansicht den Verflüssiger nach Fig. 6;
- Fig. 9: in schematisch perspektivischer Darstellung einen erfindungsgemäßen Verflüssiger gemäß einer fünften Ausführungsform;
- Fig. 10 in: einer schematischen Stirnansicht den Verflüssiger nach Fig. 9;
- Fig. 11: in schematischer Seitenansicht den Verflüssiger nach Fig. 9;
- Fig. 12: in schematischer Perspektivansicht einen erfindungsgemäßen Verflüssiger gemäß einer sechsten Ausführungsform;
- Fig. 13 in: einer schematischen Seitenansicht den Verflüssiger nach Fig. 12; und
- Fig. 14 in: rein schematischer Darstellung eine Geschirrspülmaschine nach dem Stand der Technik.

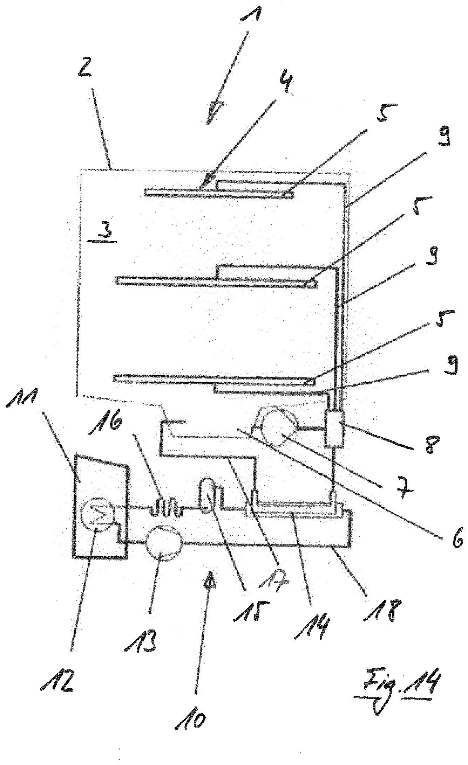

Fig. 14 lässt in rein schematischer Darstellung ein wasserführendes Haushaltsgerät in der Ausgestaltung einer aus dem Stand der Technik an sich bekannten Geschirrspülmaschine 1 erkennen.

Die beispielhaft in Fig. 14 dargestellte Geschirrspülmaschine 1 verfügt über einen Spülbehälter 2, der einen Spülraum 3 bereitstellt. Im bestimmungsgemäßen Verwendungsfall dient der Spülraum 3 der Aufnahme von zu reinigendem und in Fig. 14 nicht näher dargestellten Spülgütern.

Als Beschickungseinrichtung zur Beschickung von zu reinigendem Spülgut mit Spülflotte dient eine Sprüheinrichtung 4, die innerhalb des Spülbehälters 2 angeordnet ist. Im gezeigten Ausführungsbeispiel verfügt die Sprüheinrichtung 4 über insgesamt drei Sprüharme 5, die jeweils verdrehbar innerhalb des Spülbehälters 2 angeordnet sind.

Der Spülraum 3 mündet in einen im Detail in Fig. 14 nicht näher dargestellten Sammeltopf 6 des Spülbehälters 2 ein, an den eine Umwälzpumpe 7 strömungstechnisch angeschlossen ist. Die Sprüharme 5 der Sprüheinrichtung 4 sind mittels der Zuführleitungen 9 unter Zwischenschaltung der Wasserweiche 8 an die Umwälzpumpe 7 strömungstechnisch angeschlossen. Im bestimmungsgemäßen Verwendungsfall kann damit eine Beschickung der Sprüharme 5 mit Spülflotte mittels der Umwälzpumpe 7 stattfinden. Die Geschirrspülmaschine 1 verfügt des Weiteren über eine Wärmepumpeneinrichtung 10. Diese weist einen Verdampfer 12, einen Verdichter 13, einen Verflüssiger 14, einen Sammler 15, ein Expansionsorgan in Form einer Drossel 16 sowie eine diese Baukomponenten strömungstechnisch miteinander verbindende Leitung 18 auf, durch die ein Arbeits- bzw. Kältemittel oder -medium geführt ist.

Der Verdampfer 12 ist innerhalb eines Tanks 11 angeordnet, der mit einem Wärmeträgermedium befüllt ist, bei dem es sich bevorzugter Weise um Wasser handelt.

Im bestimmungsgemäßen Verwendungsfall der Wärmepumpeneinrichtung 10 findet mit Hilfe des Verflüssigers 14 ein Wärmeübertrag von dem durch die Leitung 18 der Wärmepumpeneinrichtung 10 geführten Arbeitsmedium auf die Spülflotte statt. Zu diesem Zweck ist eine an die Umwälzpumpe 7 strömungstechnisch angeschlossene Leitung 17 vorgesehen, die der Spülflottenumwälzung dient. Die im Betriebsfall im Verflüssiger 14 durch Verflüssigung des Arbeitsmediums freiwerdende Wärmeenergie wird mithin auf die durch die Leitung 17 im Umwälzbetrieb geführte Spülflotte übertragen.

Gemäß der in den Figuren gezeigten bevorzugten Ausführungsform ist der Verflüssiger 14 als Koaxialwärmetauscher ausgebildet und verfügt über zwei Rohre, die unter Belassung eines Ringspaltraums koaxial zueinander angeordnet sind. Dabei dient das Innenrohr als Spülflottenrohr, das an die Leitung 17 angeschlossen ist. Das das Innenrohr umgebende Außenrohr dient als Kältemittelrohr und ist an die Leitung 18 der Wärmepumpeneinrichtung 10 angeschlossen. Im bestimmungsgemäßen Betriebsfall durchströmt das Arbeitsmittel den Ringspaltraum und die Spülflotte ist durch das Innenrohr geführt.

Dem Verflüssiger 14 ist ein Sammler 15 strömungstechnisch nachgeschaltet. Dieser Sammler 15 stellt ein Puffervolumen bereit, das dazu dient, im Verflüssiger 14 verflüssigtes Arbeitsmittel zwischenspeichern zu können, bevor dieses im Fortgang des weiteren Prozesszyklusses über die Drossel 16 für ein erneutes Verdampfen zum Verdampfer 12 gelangt.

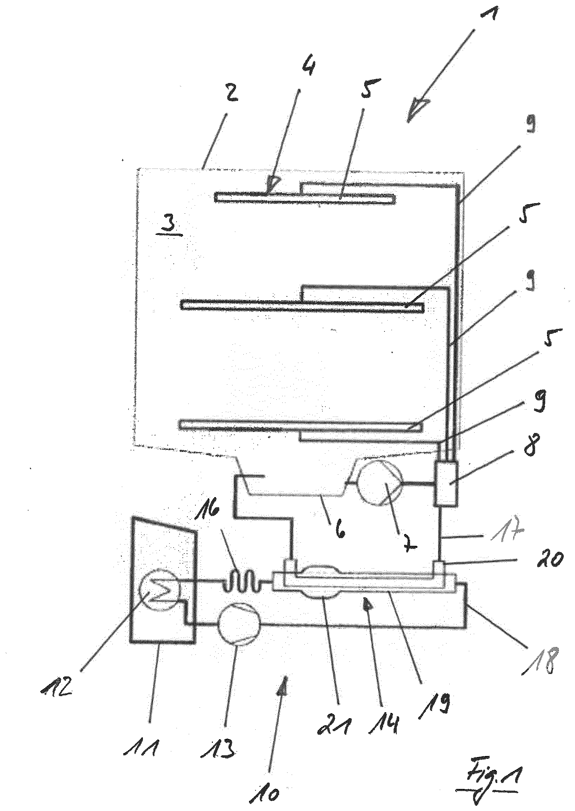

In Abkehr zur zweiteiligen Ausgestaltung von Verflüssiger 14 und Sammler 15 wird mit der Erfindung vorgeschlagen, dass der Verflüssiger 14 und der Sammler 15 zu einem Bauteil miteinander kombiniert ausgebildet sind. Diese erfindungsgemäße Ausgestaltung ist in Fig. 1 gezeigt.

Fig. 1 lässt eine nach der Erfindung ausgebildete Geschirrspülmaschine 1 erkennen, die im Unterschied zu einer Geschirrspülmaschine 1 nach dem Stand der Technik gemäß Fig. 14 über einen Verflüssiger 14 verfügt, der einen Sammler 21 als integralen Bestandteil aufweist.

Die zu einem Bauteil kombinierte Ausgestaltung von Verflüssiger 14 und Sammler 21 bietet insbesondere den Vorteil, dass die Herstellung durch vereinfachte Handhabung insgesamt vereinfacht und damit kostengünstiger ist. Zudem entfallen nach dem Stand der Technik noch notwendige Lötstellen zur strömungstechnischen Verbindung von Verflüssiger 14 und Sammler 15, womit potentielle Leckagestellen minimiert und damit die Betriebssicherheit maximiert ist.

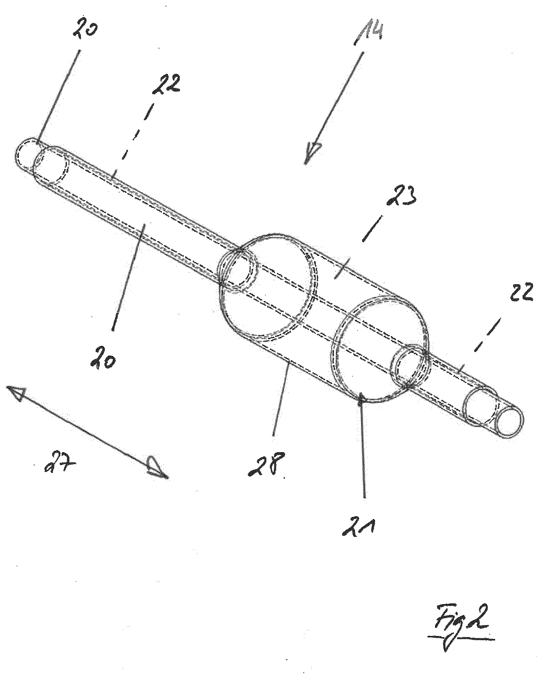

Der in erfindungsgemäßer Weise ausgebildete Verflüssiger 14 ist in unterschiedlichen Ausführungsformen in den weiteren Figuren 2 bis 13 gezeigt.

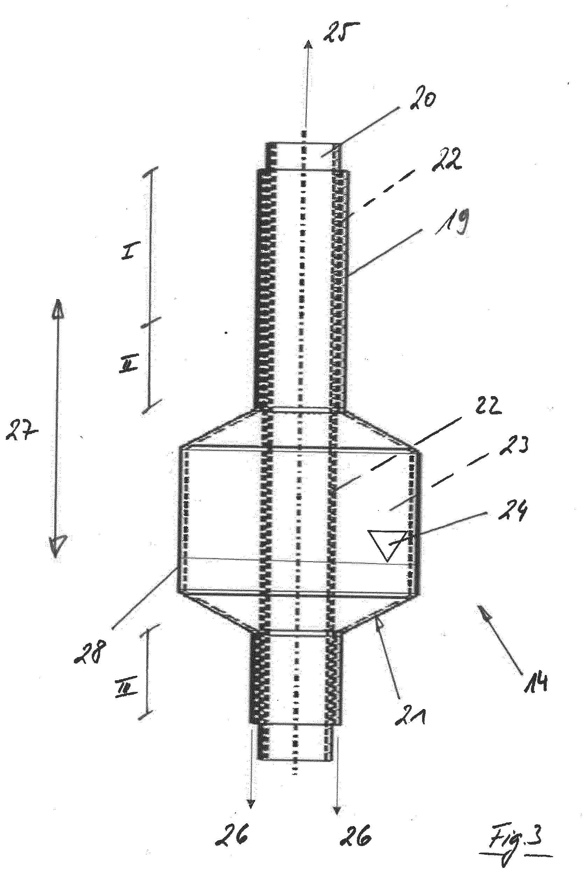

Wie sich beispielsweise aus der Darstellung nach Fig. 2 ergibt, ist der Verflüssiger 14 als Koaxialwärmetauscher ausgebildet und verfügt über zwei Rohre, nämlich ein Innenrohr 20 einerseits und ein Außenrohr 19 andererseits. Die beiden Rohre 19 und 20 sind unter Belassung eines Ringspaltraums 22 koaxial zueinander angeordnet. Dabei dient das Innenrohr 20 im bestimmungsgemäßen Verwendungsfall der Hindurchführung von Spülflotte, wobei das das Innenrohr 20 aufnehmende Außenrohr 19 der Hindurchführung eines Kältemittels dient, und zwar im Gegenstrom zur Spülflotte, wie dies die in Figur 3 eingezeichneten Pfeile 25 und 26 erkennen lassen. Dabei stellen die Pfeile 26 die Strömungsrichtung für das Kältemittel und der Pfeil 25 die Strömungsrichtung für die Spülflotte dar.

Zwecks integraler Ausgestaltung des Sammlers 21 stellt der Verflüssiger 14 ein Zusatzvolumen 23 bereit, das in den Ringspaltraum 22 einmündet, wie sich dies anhand einer ersten Ausführungsform beispielsweise aus Fig. 2 ergibt. Dabei ist im gezeigten Ausführungsbeispiel das Zusatzvolumen 23 durch einen in Rohrlängsrichtung 27 verlaufenden Abschnitt 28 des Außenrohres 19 gebildet, der einen im Vergleich zum übrigen Innendurchmesser vergrößerten Innendurchmesser aufweist. Das Außenrohr 19 weist mithin im Bereich des Abschnitts 28 eine radiale Erweiterung auf, wodurch das als Sammlervolumen dienende Zusatzvolumen 23 geschaffen ist.

Fig. 3 zeigt eine zu Fig. 2 ähnliche Ausführungsform. Es ist hier eine stehende Anordnung des Verflüssigers 14 gezeigt, so dass sich im bestimmungsgemäßen Betriebsfall verflüssigtes Arbeitsmedium gemäß dem Pegelstand 24 im Zusatzvolumen 23 ansammelt.

Darüber hinaus sind gemäß der Ausführungsform nach Fig. 3 in Rohrlängsrichtung 27 aufeinander nachfolgende Rohrbereiche mit unterschiedlichen Abmessungen für den Ringspaltraum 22 vorgesehen. So ist beispielsweise ein erster Bereich I mit einem Ringspalt von zum Beispiel 0,8 mm, ein zweiter Bereich II mit einem Ringspalt von zum Beispiel 0,4 mm und ein dritter Bereich III mit einem Ringspalt von zum Beispiel 0,2 mm vorgesehen. Diese unterschiedlichen Ringspalte dienen insbesondere dazu, die insgesamt benötigte Füllmenge an Kältemittel zu optimieren, wobei dem Umstand Rechnung getragen ist, dass verkleinerte Ringspalte für Bereiche vorgesehen sein können, in denen das Kältemittel eine erhöhte Dichte aufweist. Dabei weist das Kältemittel insbesondere im Bereich III die höchste Dichte auf, da es hier in Durchströmungsrichtung 25 bereits verflüssigt ist.

Das vom Sammler 21 bereitgestellte Sammlervolumen, das heißt Zusatzvolumen 23 des Außenrohres 19 dient dazu, unterschiedliche Betriebszustände der Wärmepumpeneinrichtung 10 zu kompensieren. Denn oftmals sind im bestimmungsgemäßen Verwendungsfall die Füllstände des Verdampfers sehr unterschiedlich, wobei der Sammler 21 einen Rückstau von verflüssigtem Kältemittel im Verflüssiger verhindert, was ansonsten zu einem starken Anstieg des Hochdrucks und ggfls. zu einer Störabschaltung führen könnte.

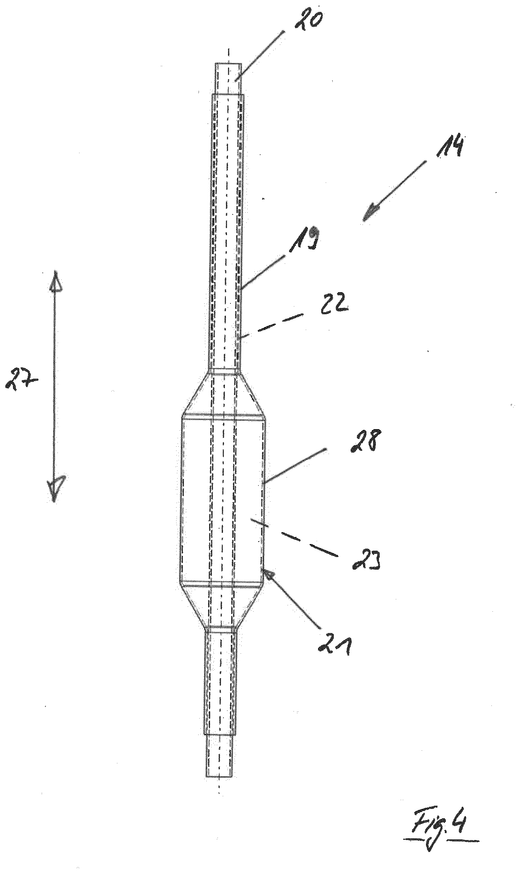

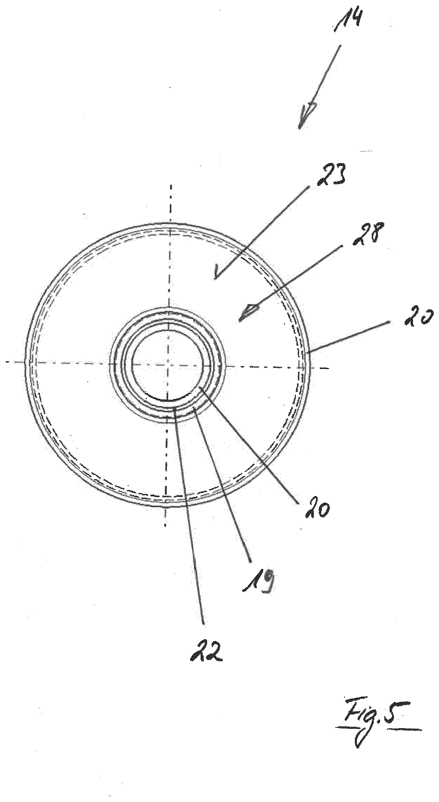

Eine alternative Ausgestaltung des erfindungsgemäßen Verflüssigers zeigen die Figuren 4 und 5. Dabei ist gemäß dieser Ausführungsform im Unterschied zu den schon vorbeschriebenen Ausführungsformen ein in Rohrlängsrichtung 27 längerer Abschnitt 28 vorgesehen. Aufgrund der längeren Ausgestaltung des Abschnitts 28 kann bei identisch zur Verfügung gestelltem Zusatzvolumen 23 der Innendurchmesser des Außenrohres 19 im Bereich des Abschnitts 28 kleiner als bei den vorerläuterten Ausführungsformen ausfallen.

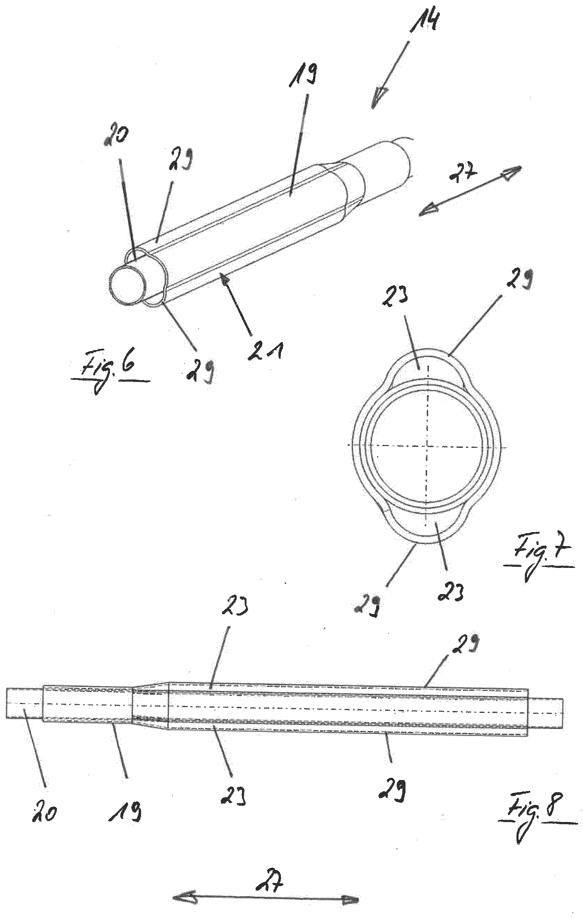

Eine weitere Ausführungsform der erfindungsgemäßen Ausgestaltung ist den Figuren 6 bis 8 zu entnehmen. Gemäß dieser Ausführungsform verfügt das Außenrohr 19 in Rohrlängsrichtung 27 verlaufende Radialausbuchtungen 29. Es sind dabei zwei Radialausbuchtungen 29 vorgesehen, wie sich dies insbesondere aus der Darstellung nach Fig. 7 ergibt. Dabei sind die Radialausbuchtungen 29, was sich gleichfalls aus der Darstellung nach Fig. 7 ergibt, in Umfangsrichtung des Außenrohres 19 gleich verteilt ausgerichtet. Im Ergebnis dieser Ausgestaltung ergibt sich eine von der Kreisform abweichende Außenabmessung des Außenrohres 19.

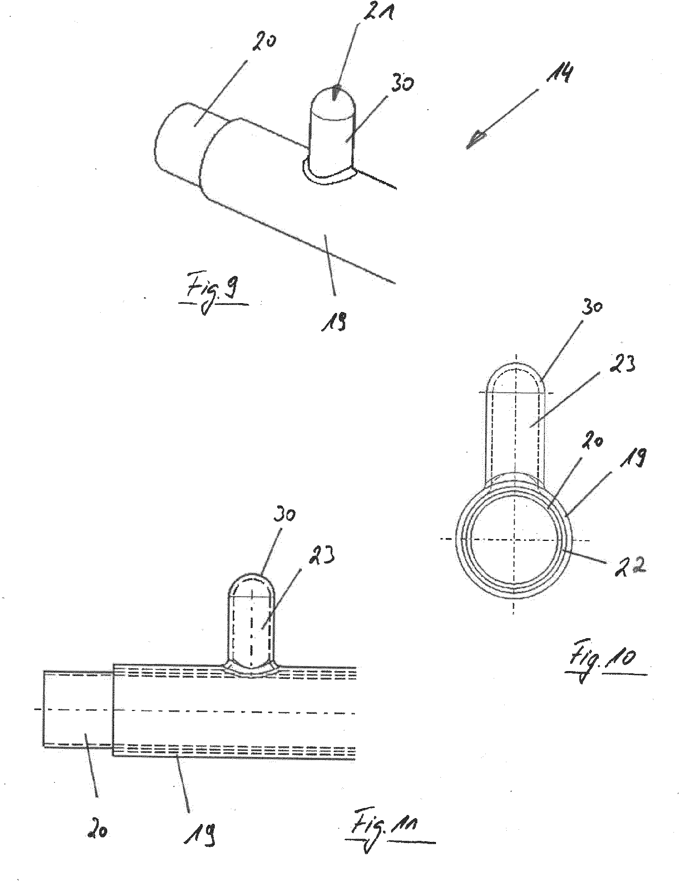

Eine weitere Ausführungsform ist den Figuren 9 bis 11 zu entnehmen. Gemäß dieser Ausführungsform ist ein vom Außenrohr 19 bereitgestellter Rohrstutzen 30 vorgesehen, der das als Sammlervolumen dienende Zusatzvolumen 23 bereitstellt. Wie sich aus einer Zusammenschau der Figuren 9 bis 11 ergibt, ist der Rohrstutzen bevorzugterweise radial zum Außenrohr 19 ausgerichtet.

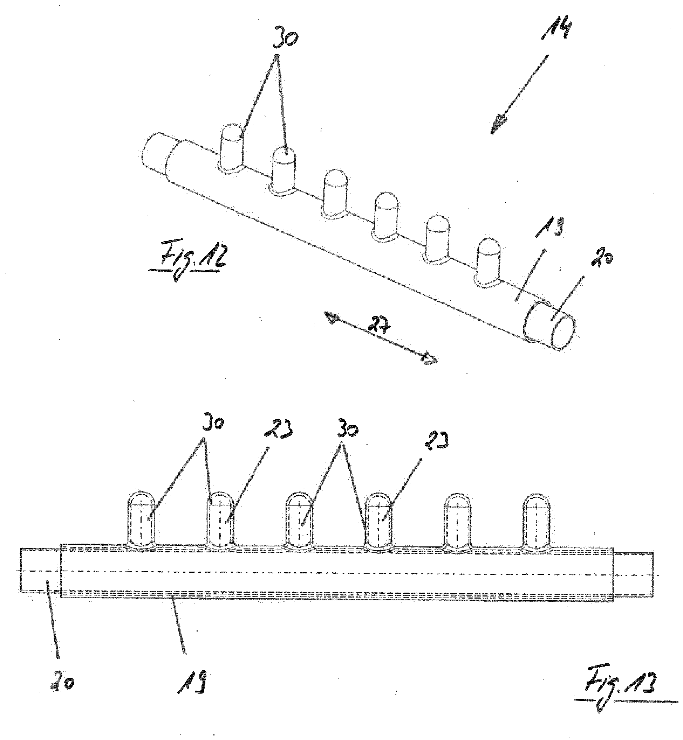

In Ergänzung zu den Figuren 9 bis 11 zeigen die Figuren 12 und 13 eine weitere Ausführungsform, gemäß welcher eine Mehrzahl von Rohrstutzen 30 vorgesehen sind. Diese Rohrstutzen 30 sind in Rohrlängsrichtung 27 hintereinander angeordnet, wobei bevorzugterweise äquidistante Abstände gegeben sind, wie sich dies insbesondere aus der Darstellung nach Fig. 13 ergibt.

### Bezugszeichen

- 1: Geschirrspülmaschine
- 2: Spülbehälter
- 3: Spülraum
- 4: Sprüheinrichtung
- 5: Sprüharm
- 6: Sammeltopf
- 7: Umwälzpumpe
- 8: Wasserweiche
- 9: Zuführungsleitung
- 10: Wärmepumpeneinrichtung
- 11: Tank
- 12: Verdampfer
- 13: Verdichter
- 14: Verflüssiger
- 15: Sammler
- 16: Drossel
- 17: Leitung
- 18: Leitung
- 19: Außenrohr
- 20: Innenrohr
- 21: Sammler
- 22: Ringspaltraum
- 23: Zusatzvolumen
- 24: Pegelstand
- 25: Pfeil
- 26: Pfeil
- 27: Rohrlängsrichtung
- 28: Abschnitt
- 29: Radialausbuchtung
- 30: Rohrstutzen

## Patentansprüche

1. Wasserführendes Haushaltsgerät, insbesondere Geschirrspülmaschine, mit einem einen Reinigungsraum (3) bereitstellenden Reinigungsbehälter (2) zur Aufnahme von zu reinigendem Reinigungsgut, einer Beschickungseinrichtung (4) zur Beschickung von zu reinigendem Reinigungsgutmit Reinigungsflotte sowie mit einer Wärmepumpeneinrichtung (10) zur Aufheizung von Reinigungsflotte, wobei die Wärmepumpeneinrichtung (10) einen Verflüssiger (14) und einen Sammler (15, 21) aufweist,
wobei der Verflüssiger (14) zwei Rohre (19, 20) aufweist, die unter Belassung eines Ringspaltraums (22) koaxial zueinander angeordnet sind, wobei das vom Ringspaltraum (22) umgebene Innenrohr (20) mit Reinigungsflotte und der vom Außenrohr (19) bereitgestellte Ringspaltraum (22) mit Kältemittel beaufschlagt sind, **dadurch gekennzeichnet,**
**dass** der Verflüssiger (14) und der Sammler (15, 21) zu einem Bauteil miteinander kombiniert ausgebildet sind,
wobei das Außenrohr (19) einen in Rohrlängsrichtung (27) verlaufenden Abschnitt (28) mit einem im Vergleich zum übrigen Innendurchmesser vergrößerten Innendurchmesser aufweist oder mit mindestens einer in Rohrlängsrichtung (27) verlaufenden Radialausbuchtung (29) versehen ist.

2. Gerät nach Anspruch 1,
**dadurch gekennzeichnet,**
**dass** der Sammler (21) als integraler Bestandteil des Verflüssigers (14) ausgebildet ist.

3. Gerät nach Anspruch 1 oder 2,
**dadurch gekennzeichnet,**
**dass** der Ringspaltraum (22) in ein als Sammlervolumen dienendes Zusatzvolumen (23) einmündet.

4. Gerät nach Anspruch 3,
**dadurch gekennzeichnet,**
**dass** das Zusatzvolumen (23) vom Außenrohr (19) bereitgestellt ist.

5. Gerät nach einem der vorhergehenden Ansprüche,
**dadurch gekennzeichnet,**
**dass** das Außenrohr (19) eine Mehrzahl von in Rohrlängsrichtung (27) verlaufenden Radialausbuchtungen (29) aufweist, die in Umfangsrichtung des Außenrohres (19) gleich verteilt angeordnet sind.

6. Gerät nach einem der Ansprüche 3 bis 5,
**dadurch gekennzeichnet,**
**dass** der Verflüssiger (14) in einem in Strömungsrichtung des Arbeitsmittels vor dem Zusatzvolumen (23) gelegenen Abschnitt (I, II) einen Ringspaltraum (22) mit einem ersten Maß und in einem in Strömungsrichtung des Arbeitsmittels hinter dem Zusatzvolumen (23) gelegenen Abschnitt (III) einen Ringspaltraum (22) mit einem insbesondere vom ersten Maß verschiedenen, vorzugsweise kleineren zweiten Maß aufweist.

7. Gerät nach einem der Ansprüche 3 bis 6,
**dadurch gekennzeichnet,**
**dass** der Verflüssiger (14) in Strömungsrichtung des Arbeitsmittels vor dem Zusatzvolumen (23) einen ersten Abschnitt (I) mit einem ersten Ringspaltraummaß und einen zwischen dem ersten Abschnitt (I) und dem Zusatzvolumen (23) angeordneten zweiten Abschnitt (II) mit einem vom ersten verschiedenen, vorzugsweise kleineren zweiten Ringspaltraummaß aufweist.

## Claims

1. Water-using household appliance, in particular a dishwasher, comprising a cleaning container (2) that provides a cleaning chamber (3) and is intended for receiving items to be cleaned, a loading device (4) for loading items to be cleaned with cleaning solution, and a heat pump device (10) for heating cleaning solution, the heat pump device (10) having a condenser (14) and a collector (15, 21), the condenser (14) having two tubes (19, 20) which are arranged coaxially with one another so as to leave an annular gap (22), the inner tube (20) surrounded by the annular gap (22) being supplied with cleaning solution, and the annular gap (22) provided by the outer tube (19) being supplied with refrigerant, **characterised in that** the condenser (14) and the collector (15, 21) are combined with one another to form one component, the outer tube (19) having a portion (28) which extends in the tube longitudinal direction (27) and has an inner diameter which is enlarged compared with the rest of the inner diameter, or which is provided with at least one radial bulge (29) that extends in the tube longitudinal direction (27).

2. Appliance according to claim 1, **characterised in that** the collector (21) is designed as an integral part of the condenser (14).

3. Appliance according to either claim 1 or claim 2, **characterised in that** the annular gap (22) leads into an additional volume (23) which acts as a collector volume.

4. Appliance according to claim 3, **characterised in that** the additional volume (23) is provided by the outer tube (19).

5. Appliance according to any of the preceding claims, **characterised in that** the outer tube (19) has a plurality of radial bulges (29) which extend in the tube longitudinal direction (27) and are evenly distributed in the circumferential direction of the outer tube (19).

6. Appliance according to any of claims 3 to 5, **characterised in that** the condenser (14), in a portion (I, II) located in front of the additional volume (23) in the flow direction of the working medium, has an annular gap (22) having a first dimension, and, in a portion (III) located behind the additional volume (23) in the flow direction of the working medium, has an annular gap (22) having a second dimension that is in particular different from, preferably smaller than, the first dimension.

7. Appliance according to any of claims 3 to 6, **characterised in that** the condenser (14) has a first portion (I) in front of the additional volume (23) in the flow direction of the working medium, which first portion has a first annular gap dimension, and a second portion (II) arranged between the first portion (I) and the additional volume (23), which second portion has a second annular gap dimension which is different from, preferably smaller than, the first annular gap dimension.

## Revendications

1. Appareil électroménager d'acheminement d'eau, en particulier lave-vaisselle, comportant un récipient de nettoyage (2) fournissant un compartiment de nettoyage (3), lequel récipient de nettoyage est destiné à recevoir des articles à nettoyer, un dispositif de chargement (4) destiné à charger des articles à nettoyer avec du liquide de nettoyage et un dispositif de pompe à chaleur (10) destiné à chauffer le liquide de nettoyage, le dispositif de pompe à chaleur (10) présentant un condenseur (14) et un collecteur (15, 21),
le condenseur (14) présentant deux tuyaux (19, 20) disposés coaxialement l'un par rapport à l'autre de façon à laisser un espace de fente annulaire (22), le liquide de nettoyage étant appliqué sur le tuyau intérieur (20) entouré par l'espace de fente annulaire (22) et un réfrigérant étant appliqué sur l'espace de fente annulaire (22) fourni par le tuyau extérieur (19),
**caractérisé**
**en ce que** le condenseur (14) et le collecteur (15, 21), combinés l'un à l'autre, sont conçus de façon à former un seul composant,
le tuyau extérieur (19) présentant une section (28) s'étendant dans la direction longitudinale (27) du tuyau avec un diamètre intérieur supérieur au diamètre intérieur restant ou étant pourvu d'au moins une protubérance radiale (29) s'étendant dans la direction longitudinale (27) du tuyau.

2. Appareil selon la revendication 1,
**caractérisé**
**en ce que** le collecteur (21) est conçu comme partie intégrante du condenseur (14).

3. Appareil selon la revendication 1 ou 2,
**caractérisé**
**en ce que** l'espace de fente annulaire (22) débouche dans un volume supplémentaire (23) servant de volume collecteur.

4. Appareil selon la revendication 3,
**caractérisé**
**en ce que** le volume supplémentaire (23) est fourni par le tuyau extérieur (19).

5. Appareil selon l'une des revendications précédentes,
**caractérisé**
**en ce que** le tuyau extérieur (19) présente une pluralité de protubérances radiales (29) s'étendant dans la direction longitudinale (27) du tuyau, lesquelles protubérances radiales sont disposées en étant réparties de façon régulière dans la direction circonférentielle du tuyau extérieur (19).

6. Appareil selon l'une des revendications 3 à 5,
**caractérisé**
**en ce que** le condenseur (14) présente un espace de fente annulaire (22) d'une première dimension dans une section (I, II) située en amont du volume supplémentaire (23) dans la direction d'écoulement du fluide de travail, et un espace de fente annulaire (22) d'une seconde dimension en particulier différente de la première dimension, de préférence plus petite, dans une section (III) située en aval du volume supplémentaire (23) dans la direction d'écoulement du fluide de travail.

7. Appareil selon l'une des revendications 3 à 6,
**caractérisé**
**en ce que** le condenseur (14) présente une première section (I) d'une première dimension d'espace de fente annulaire en amont du volume supplémentaire (23) dans la direction d'écoulement du fluide de travail, et une seconde section (II) d'une seconde dimension d'espace de fente annulaire différente de la première dimension d'espace de fente annulaire, de préférence plus petite, disposée entre la première section (I) et le volume supplémentaire (23).
